# EUROPEAN PATENT APPLICATION

(11) **EP 4 439 213 A1**
(43) Date of publication of application: **02.10.2024**
(21) Application number: 23164768.6
(22) Date of filing: 28.03.2023
(51) Int. Cl.: G05B 23/02

(54) **METHOD FOR GENERATING AN ENRICHED ALARM MESSAGE**

(71) Applicant: ABB SCHWEIZ AG, 5400 Baden (CH)
(72) Inventor: HOERNICKE, Mario, 76829 Landau (DE); GRUENER, Sten, 69514 Laudenbach (DE); SCHOCH, Nicolai, 69120 Heidelberg (DE); ESKANDANI, Nafise, 64380 Rossdorf (DE); STARK, Katharina, 69469 Weinheim (DE)
(74) Representative: Maiwald GmbH

(57) **Abstract**

A method (100) for generating an enriched alarm message associated to an initial alarm message (110) of a concerned component of a plant is described, including:
providing (S1) a plurality of information model rules (130) related to alarm messages for respective interrelations of components of the plant;
applying (S3) the plurality of information model rules (130) related to the alarm messages to respective components of a topology of the plant, for generating a system of information model rules related to the respective alarm messages of the plant;
inferring (S4) logical consequences for the system of information model rules, which are related to the initial alarm message originated by the concerned component; and generating (S5) the enriched alarm message (140) by combining the information model rules related to the initial alarm message of the concerned component, based on the inferred logical consequences.

## Description

### Background

For controlling components of newly configured plants and modules of modular plants typically generic alarm messages and default values of severities of the alarm message are generated, providing little significant information substance. Those generic alarm messages and severities have to be manually adapted by an engineer or a plant operator to provide meaningful alarm messages and reasonable severities for every alarm message. This is a quite exhausting and error-prone procedure, and this takes a lot of effort.

### Detailed description of the invention

Alarm handling is and always has been a quite tough task in engineering. Newly configured plants and modules of modular plants can typically generate a list of alarms including a plurality of initial alarms originated by a configuration of a functional module or a plant.

Accordingly, the present invention is directed to a method for generating an enriched alarm message, a computer system, a use of a method for generating an enriched alarm message, a computer program and a computer readable storage medium with subject matter as described in independent claims. Advantageous modifications of the invention are stated in dependent claims. All combinations of at least two of the features disclosed in the description, the claims, and the figures fall within the scope of the invention. In order to avoid repetition, features disclosed in accordance with the method shall also apply and be claimable in accordance with mentioned systems.

In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly. Some features are provided with numeral words to improve readability or to make the assignment more clear, but this does not imply the presence of certain features.

To achieve these and other advantages and in accordance with the purpose of the invention, as embodied and broadly described herein, there can be provided a method for generating an enriched alarm message associated to an initial alarm message of a concerned component of a plant, including the following steps:
In one step, a plurality of information model rules related to alarm messages for respective interrelations of components of the plant are provided.
In another step, the plurality of information model rules related to the alarm messages are applied to respective components of a topology of the plant for generating a system of information model rules, which are related to the respective alarm messages of the plant.
In another step, logical consequences for the system of information model rules, wherein the information model rules are related to the initial alarm message originated by the concerned component, are inferred.
In a further step, the enriched alarm message can be generated by combining the information model rules related to the initial alarm message of the concerned component, based on the inferred logical consequences.

The term "plant" can include parts of the plant, as for instance a module of a modular plant and/or a part of a plant including a plurality of components.

The topology of the plant can include a plurality of links between a plurality of components and/or detailed information and/or specifications of the components of the plant. Alternatively or additionally, detailed information and/or specifications of the components of the plant can be provided and used for generating a system of information model rules. The topology and/or parts of the topology including the respective components of the plant can be provided to perform the method for generating the system of information model rules and/or for generating an enriched alarm message associated to an initial alarm message.

A plurality of generated enriched alarm messages can be stored and linked to the related initial alarm message for generation of an enriched alarm message based on the related initial alarm message. This can improve the speed of generation of the enriched alarm message.

The interrelations of components can include concepts and/or relationships and/or constraints and/or dependencies and/or rules and/or operations of components or linked components or combination of components.

The system of information model rules related to the respective alarm messages of the plant can be a plurality of information model rules, which are related to the respective components of the plant which are interrelated with the component concerned. The plurality of information model rules applied to the topology of the plant can generate a specifically relevant subset of the plurality of rules applicable to the specific plant.

A concerned component of the plant can be the component of the plant were the initial alarm can be related to.

Interrelations of components of the plant can be relations and/or interrelations of components of a same type and/or components of different types of the plant, which are linked and/or configured to each other in such a way that an interaction and/or an interrelation and/or a relation between the components can be established.

The information model rules and data related to a performance of the method as mentioned above can be represented either in a simple rules database or in a more complex domain ontology for alarms or more and/or by means of a knowledge model or information model and/or by means of a knowledge graph even along with related data, and accordingly in a more suitable graph database.

The logical consequences can, for example, be inferred by means of e.g. a logic reasoner and/or a semantic reasoner.

The initial alarm message of the concerned component of the plant can be provided to perform the method for generating an enriched alarm message.

The enriched alarm message can include a severity value for characterizing the enriched alarm message and the severity value of the enriched alarm message of a component of a plant can be determined as described below, wherein the enriched alarm message associated to the initial alarm message of a concerned component of a plant can be generated concurrently to the generation of the severity value of the enriched alarm message.

Advantageously, generating enriched alarm messages, which can include values for alarm message severities, can increase an engineering efficiency for alarm management and can increase a quality of the generated enriched alarm messages.

Using this method, an expert system can be provided for automated generation of reasonable and/or meaningful enriched alarm messages, preferably including severities of the related alarm message, which can be based on topographic data of the plant, as preferably provided by a Piping and Instrumentation Diagram (P&ID), and a list of initial alarms and a plurality of expert rules of the interrelations of the related components of the plant and/or a plurality of control narratives of the components of the plant. Further improvements can be achieved by means of natural language processing (NLP) and/or machine learning and/or multi-modal machine learning, which are each related to alarm messages, as described below.

The method can be further improved based on statistics about relevant plant data and/or related data and/or based on statistical learning and/or based on a Feedback Loop, e.g., using an active learning approach, as described below. A knowledge and understanding for alarm generation of the plant can be improved based on very few to-the-point user interactions in the framework of active learning, when performing the feedback loop. This knowledge and understanding can be used to improve information model rules to even further improve the overall system in respect to enriched alarm message generation, preferably also including the message itself and the related severities.

As described throughout this specification, the plurality of information model rules can be based on piping and instrumentation diagrams (P&ID) and/or on topologies of the plant and/or on process plant graphs. Further on, the plurality of information model rules can be based on control narratives for components of the plant and/or default alarms messages, including a related severity of the alarm messages, which can be generated by the component.

Advantageously, using the method as described throughout the specification can generate reasonable and meaningful alarm messages and severities related to the alarm messages automatically and can include further explanations. As for instance: "alarm with severity 8 (out of 10) related to valve type A at output of reactor".

The plurality of information model rules can include information provided by an orchestration designer tool, e.g., P&IDs, topology graphs, I/O, equipment, tags, and/or raising condition, including alarm-related deterministic information to generate enriched alarm messages.

Advantageously, because the information model rules related to alarm messages can be explicitly specified, the approach for generating an enriched alarm message can be transparent. The term "transparent" can mean, that it can be tracked and/or understand how the enriched alarm message can be generated, preferably to fulfil safety requirements for operation of the plant.

According to an aspect, the respective information model rules related to alarm messages can be based on expert knowledge of the components and/or of the interrelations of the components of the plant related to alarm messages.

The expert knowledge can be based on a plurality of expert rules, which can take into account a context of an alarm message, e.g., a region and/or a partition and/or a part of an overall plant topology, where the respective alarm message has its origin.

According to an aspect, the respective information model rules related to alarm messages can be based on control narratives for components of the plant related to alarm messages.

Control narratives for components of the plant can be provided by a text describing a functionality of the control.

According to an aspect, the enriched alarm message associated to the initial alarm message of the concerned component of the plant includes an extended alarm message, which can be generated by means of a trained machine learning algorithm based on the initial alarm message and/or the enriched alarm message and/or a severity of the alarm message of the concerned component of the plant, wherein the machine learning algorithm can be trained using a plurality of stored initial alarm messages and/or a plurality of stored enriched alarm messages and/or a plurality of severities of the alarm messages of the concerned component of the plant as input. The training of the machine learning algorithm can be based on a plurality of labelled extended alarm messages and/or a plurality of labelled severity of the alarm messages as target for the training. A labelled extended alarm message and/or a labelled severity of alarm messages can correspond to the initial alarm message and can, e.g., be provided manually by an operator of the plant.

The labelling can take into account an operator's experience or seniority by giving a respective label a weight depending on the experience of the operator.

By means of the trained machine learning algorithm statistical information about alarm messages and/or correlations or patterns in respect to alarm messages and/or severities of alarm messages, which can be implicitly included in a plurality of historical data of alarm messages of the plant, can be used for generating of reasonable and meaningful alarm messages and corresponding severities of the alarm messages.

By means of such a supervised machine learning approach, the machine learning algorithm can be trained to learn alarm patterns, correlations and/or underlying rules in relation to alarm messages and severities of alarm messages, in order to generate or improve, based on the given plurality of historical generated input data, alarm messages and severities of alarm messages similar to a human engineer or expert. By using the machine learning algorithm it is typically included to yield probabilistic values in respect to an accuracy of the output of the machine learning algorithm, which can be used as an "uncertainty flag".

As an example, the method can generate an enriched alarm message: "alarms that are related to valve type A are more often more severe than those related to valve type B".

In order to provide the alarm message outputs determined probabilistically, using the trained machine learning algorithm, with a kind of "reliability information", the alarm messages can be provided with a "High-Uncertainty" flag if the probability is below a certain threshold.

The enriched alarm message can automatically generate reasonable, statistically-proven and/or meaningful alarm messages and/or severities of alarm messages, even with an explanation and a related likelihood or probability to be correct. For example: "alarm with severity 9 (of 10) related to valve type B at output of reactor, since severity likely to be higher than valve type A" , because it is more often.

Advantageously, the method is based on information model rules and preferably on a probabilistic approach, based on trained machine learning algorithms, and more preferably on active learning using feedback, to be inherently transparent about the mechanism to generate enriched alarm messages and/or values for severities of alarm messages.

According to an aspect, the trained machine learning algorithm or the multi-modal machine learning algorithm, as described below, can include a natural language processing algorithm and/or a decision tree algorithm for generating the extended alarm message.

The natural language processing algorithm can be used for topic modelling for the classification or generation of alarm messages and severities of alarm messages in respect to a concerned component of the plant.

According to an aspect, the enriched alarm message associated to the initial alarm message of the concerned component of the plant can include the extended alarm message, which can be generated by means of a trained multi-modal machine learning algorithm based on a data value related to a component and/or on at least one, preferably timely, sequence of component data related to components of the plant and/or topological data of the plant. The machine learning algorithm can be trained using a plurality of data values related to a component and/or a plurality of stored sequences of component data and/or a plurality of stored topological data of the plant as input and using labelled extended alarm messages of the concerned component of the plant as target for the training.

The sequence of component data can be used to identify a trend of changing values of a component data.

The plurality of data values related to a component and/or a plurality of stored sequences of component data can include image files and/or topological data and/or timely series of physical quantities related to the components of the plant, including acoustic signals and pressure values of components.

The trained multi-model machine learning algorithm can include a decision tree algorithm (DT) or a random forest algorithm (RF) or classifier model algorithm (Classifier).

The decision tree algorithm can be trained using a training dataset, which can be a plurality of data values related to a component and/or a plurality of stored sequences of component data and/or a plurality of stored topological data of the plant as input data. The training runs of the respective algorithm can be performed by providing the input data described above to the respective algorithm and labelled data as target. During the training, the models can learn to imitate a behavior or a pattern implicit included in the set of training data.

Machine learning model usage for inference: Forward execute the trained machine learning model (DT/RF/Classifier) for inference, i.e., when presented new input data, using a format of the training input data, the model will produce output data, in the format of the labels, i.e., better suitable, i.e. enriched, alarm messages and/or severities of alarm messages.

The trained multi-model machine learning algorithm can include a natural language processing (NLP) algorithm.

The natural language processing can be trained using a training dataset, which can be a plurality of stored historical data, as for instance control narratives, including a lot of natural language text.

The training runs can be performed by providing a plurality of input data described above to the natural language processing algorithm with labelled target data for training of the NLP-based or Embeddings-based clustering or classifier model.

During training, the algorithm learns to imitate the patterns or classifications found in the plurality of input data.

Machine learning model usage for inference: Forward execute the trained machine learning algorithm, which can be a clustering or classifier, for inference, i.e., when presented new input data, using a format of the training input data, the model will produce output data in the format of the labels, i.e., better suitable, enriched alarm messages and/or severities of alarm messages.

According to an aspect, the enriched alarm message associated to the initial alarm message of the concerned component of the plant can include an uncertainty value related to the enriched alarm message including the extended alarm message associated to the initial alarm message of the concerned component of the plant, wherein the uncertainty value can be determined based on an expected value and/or a standard deviation of a probability distribution related to the generation of the extended alarm message, by means of the trained machine learning algorithm, or respectively, by means of the trained multi-modal machine learning algorithm, when generating the extended alarm message.

According to an aspect, the uncertainty value related to the enriched alarm message can be compared to an uncertainty threshold value and an input trigger for providing a labelled enriched alarm message can be generated, if the severity value exceeds the uncertainty threshold value.

The labelled enriched alarm messages can be stored and an engineer can later re-check this plausibility to improve the method by re-training of the machine learning algorithm.

Using other words, only those automatically-generated enriched alarm messages and/or severities of enriched alarm messages that have a marked high level of uncertainty can trigger an assessment of an engineer for plausibility checks, corresponding to an active learning approach for improving the enriched alarm messages, wherein the enriched alarm message previously can have included a high uncertainty value.

The active learning approach based on feedback can further improve a functionality of the method to generate enriched alarm messages and/or severities of alarm messages and can be performed in addition to generate enriched alarm messages based on information model rules and/or trained machine learning algorithms. The automatic generated alarm messages and severities of alarm messages can be assessed by an engineer and/or an expert on a regular basis or triggered by an event or triggered randomized and performed as plausibility checks.

The assessment can be triggered based on an "Active Learning" approach, whenever the enriched alarm message can be generated by the method with a "high uncertainty" label. The high uncertainty value can trigger a pop-up to an engineer or expert or operator of the plant for providing an assessment and/or for providing a labelled enriched alarm message and/or a labelled severity of the enriched alarm message to create a controlled feedback loop. The labelled enriched alarm message and/or a labelled severity of the enriched alarm message can be used for a new training loop of the trained machine learning algorithm. For improving the feedback loop the engineer or expert or operator of the plant can compare the extended alarm message with the enriched alarm message to gather information about the involved procedures for determining the respective alarm messages for improving the respective procedures.

For example, the feedback can either confirm a previously determined high uncertainty value and/or an automatically generated enriched alarm message and/or a severity of an enriched alarm message, thus decreasing the unlikeliness or increasing the probability or removing a "high-uncertainty" flag, or to dis-confirm it, thus allowing the overall system to re-calibrate the determined high uncertainty by substituting it with a labelled enriched alarm message and/or severity of an enriched alarm message, which can be input by an engineer or expert. As mentioned before, this labelled enriched alarm message and/or severity of an enriched alarm message can be stored for a re-training of the trained machine learning algorithm, wherein the machine learning algorithm can include a decision tree algorithm and/or a natural language processing algorithm. The labelled enriched alarm message and/or severity of an enriched alarm message can be weighted by an experience of the operator or expert for a set of training data for the re-training of the trained machine learning algorithm. Advantageously, using the active learning based on the described feedback, triggers the assessment of an engineer or expert, when it is most urgent and/or most impactful, while at the same time minimizing the annoying feedback requests to the engineer!

In addition, the active learning can improve a knowledge and understanding for alarm generation related to the components of the plant.

According to an aspect, the enriched alarm message associated to the initial alarm message of the concerned component of the plant can include a severity value for characterizing the enriched alarm message. The severity value of the enriched alarm message of a component of a plant can be determined by the following steps:
In one step, respective information model rules related to a severity of alarm messages for respective interrelations of components of the plant can be provided.
In another step, the respective information model rules related to the severity of the initial alarm messages can be applied to respective components of a topology of the plant, for generating a system of information model rules related to the severity of the respective initial alarm messages of the plant. In another step, logical consequences for the system of information model rules can be inferred, which are related to the severity of the initial alarm message originated by the concerned component. In another step, the severity value of the initial alarm message can be determined by combining the severity values resulting from the information model rules related to the severity values of the initial alarm message of the concerned component, based on the inferred logical consequences.

The combining of the severity values resulting from the information model rules can include a weighted combining of the severity values and/or a nested weighting of the severity values.

According to an aspect, the combined information model rules related to the initial alarm message of the component can be translated to a subset of an information model specific to the plant.

By translating and/or mapping of the combined information model rules to a subset of an information model specific to the plant can include a translation of an information model of a generic plant to an ontological model, which can be specific to the related plant.

For example, the subset of the information model specific to the plant can take into account the difference between a plant of mineral oil industry and a plant of food industry, wherein both plants include reactors and valves.

According to an aspect, the enriched alarm message can include default alarms generated by the respective component of the plant.

The default alarms, which can be originated by a manufacturer of the component, can be attached to the enriched alarm message, which can be generated by other procedures as described above.

A computer system is proposed, wherein the computer system can include an input terminal and an output terminal and a processing unit.

The input terminal can be configured for providing initial alarms of a concerned component of a plant and/or for providing topologically data of the plant.

The output terminal can be configured for providing an enriched alarm related to the concerned component of the plant;

The processing unit can be coupled to the input terminal and the output terminal; and the computer system can be configured to perform any one of the method as described above.

A use of a computer system as described above for generating an enriched alarm message associated to an initial alarm message of a concerned component of a plant, as described above, is proposed.

A computer program is proposed, including instructions, which, when the program is executed by a computer, can cause the computer to carry out any one of the methods for monitoring communication of the field device as described above.

A computer-readable storage medium for storing the computer program as described above is proposed.

### Brief description of the drawing

The accompanying drawing, which is included to provide a further understanding of the invention and is incorporated in and constitutes a part of this application, illustrates embodiments of the invention and together with the description serves to explain the principle of the invention. The drawing displays:

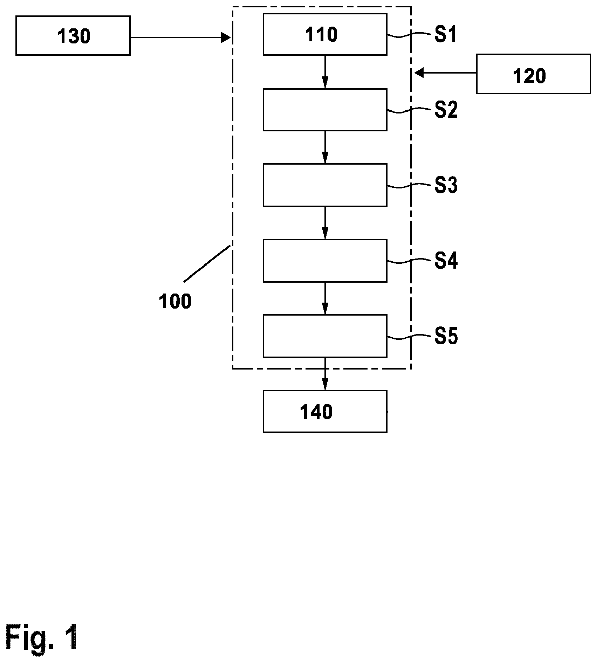

- FIG. 1: a flow diagram of a method for generating an enriched alarm message.

Figure 1 sketches a flow diagram of a method 100 for generating an enriched alarm message 140 associated to an initial alarm message 110 referred to a concerned component of a topology of a plant and/or a module of the plant.

For example, the concerned component can be a reactor and the initial alarm message 110 can be related to a tag, which is related to the reactor, particularly to a pressure of the reactor.

In step S1 of the method 100, an initial alarm message 110 of a concerned component of a plant is provided.

For example, the initial alarm message can be: "tag XYZ has high value", wherein the tag is related to the reactor.

In step S2 of the method 100, respective information model rules 130 related to alarm messages for respective components and respective interrelations of components of the plant are provided.

For example, the information model rules 130 can be based on control narratives for components of the topology of the plant. Such control narratives can include a relation between a reactor and a valve, wherein the valve is linked to an output of the reactor. The control narrative can include that the valve, which is linked to the reactor, is opened if a pressure of the reactor is above a maximum value of the pressure. The pressure of the reactor can result in an alarm tag: "high value". Resulting in a control narrative related to alarm massages: "a valve linked to a reactor has to be closed if an alarm tag related to the reactor has high value".

As a further example, for a respective information model rule related to a severity of alarm messages can be based on engineering knowledge that:
"alarms related to a valve type A are more severe than those related to a valve type B".

Another example for a respective information model rule related to a severity of alarm messages can be based to topology, resp. graph-related rules:
"all alarms that are related to an output of a reactor have higher severity than those at an input of the reactor".

These information model rules, which are related to alarm messages and/or to severities of alarm messages, can be stored in a database, for instance by means of a computer system, which is configured to perform the method for generating an enriched alarm message.

In step S3, the respective information model rules related to the alarm messages are applied to respective components of a topology of the plant 120, which is provided, for generating a system of information model rules related to the respective alarm messages of the plant.

Using the example above, the respective component can be a specific valve ABC, which is linked to an output of a specific reactor XYZ, resulting in that the system of information model rules can include: "valve ABC has to be closed if tag XYZ has high value"

Based on the alarm messages applied to the respective components of the topology, a system of information model rules, which are related to a severity of alarm messages is generated.

For the example, the system can include: "all alarms that are related to an output of a reactor have higher severity than those at the input".

In step S4, logical consequences for the system of information model rules, which are related to the initial alarm message 110 originated by the concerned component, are inferred.

By continuing the example with the initial alarm message: "tag XYZ has high value", the inferred logical consequence can be: "valve ABC has to be closed if tag XYZ has high value". The logical consequences can, for example, be inferred by means of e.g. a logic reasoner and/or a semantic reasoner.

In step S5, the enriched alarm is generated by combining the information model rules related to the initial alarm message, and/or the information model rules related to a severity of the initial alarm message, can be based of the concerned component, based on the inferred logical consequences.

For example, the enriched alarm can include:
"tag XYZ", which is related to the reactor XYZ, "has high value" therefore "valve ABC has to be closed" and "the severity of this alarm is high, because all alarms that are related to the output of the reactor XYZ have higher severity than those at the input of a reactor"

## Claims

1. A method (100) for generating an enriched alarm message associated to an initial alarm message (110) of a concerned component of a plant, comprising:
providing (S1) a plurality of information model rules (130) related to alarm messages for respective interrelations of components of the plant;
applying (S3) the plurality of information model rules (130) related to the alarm messages to respective components of a topology of the plant, for generating a system of information model rules related to the respective alarm messages of the plant;
inferring (S4) logical consequences for the system of information model rules, which are related to the initial alarm message originated by the concerned component; and
generating (S5) the enriched alarm message (140) by combining the information model rules related to the initial alarm message of the concerned component, based on the inferred logical consequences.

2. The method (100) according to claim 1, wherein the respective information model rules (130) related to alarm messages are based on expert knowledge of the components and/or of the interrelations of the components of the plant, which is related to alarm messages;

3. The method (100) according to claim 1 or 2, wherein the respective information model rules (130) related to alarm messages are based on control narratives for components of the plant, which are related to alarm messages.

4. The method (100) according to any one of the preceding claims, wherein the enriched alarm message (140) associated to the initial alarm message of the concerned component of the plant comprises an extended alarm message, which is generated by means of a trained machine learning algorithm based on the initial alarm message (110) and/or the enriched alarm message (140) and/or a severity of the alarm message of the concerned component of the plant, wherein the machine learning algorithm is trained using a plurality of stored initial alarm messages and/or a plurality of stored enriched alarm messages and/or a plurality of severity of the alarm messages of the concerned component of the plant as input; using a plurality of labelled extended alarm messages and/or a plurality of labelled severities of the alarm messages as target for the training.

5. The method (100) according to claim 4, wherein the trained machine learning algorithm comprises a natural language processing algorithm and/or a decision tree algorithm for generating the extended alarm message.

6. The method (100) according to any of the preceding claims, wherein the enriched alarm message (140) associated to the initial alarm message of the concerned component of the plant comprises the extended alarm message, which is generated by means of a trained multi-modal machine learning algorithm based on a data value related to a component and/or on at least one sequence of component data related to a component of the plant and/or topological data of the plant; and wherein the machine learning algorithm is trained using a plurality of data values related to a component and/or a plurality of stored sequences of component data related to a component of the plant and/or a plurality of stored topological data of the plant, as input; using labelled extended alarm messages of the concerned component of the plant as target for the training.

7. The method (100) according to claim 4 to 6, wherein the enriched alarm message (140) associated to the initial alarm message of the concerned component of the plant comprises an uncertainty value related to the enriched alarm message (140) comprising the extended alarm message associated to the initial alarm message of the concerned component of the plant, wherein the uncertainty value is determined based on an expected value and/or a standard deviation of a probability distribution related to the generation of the extended alarm message, by means of the trained machine learning algorithm, or respectively, by means of the trained multi-modal machine learning algorithm, when generating the extended alarm message.

8. The method (100) according to claim 7, wherein the uncertainty value related to the enriched alarm message (140) is compared to an uncertainty threshold value; and wherein an input trigger for providing a labelled enriched alarm message is generated, if the severity value exceeds the uncertainty threshold value.

9. The method (100) according to any one of the preceding claims, wherein the enriched alarm message (140) associated to the initial alarm message (110) of the concerned component of the plant comprises a severity value for characterizing the enriched alarm message (140); and the severity value of the enriched alarm message of a component of a plant is determined by:
providing respective information model rules (130) related to a severity of alarm messages for respective components and interrelations of components of the plant;
applying the respective information model rules (130) related to the severity of the alarm messages to respective components of a topology of the plant, for generating a system of information model rules related to the severity of the respective alarm messages of the plant;
inferring logical consequences for the system of information model rules, which are related to the severity of the initial alarm message originated by the concerned component; and
determining the severity value of the initial alarm message by combining the severity values resulting from the information model rules (130) related to the severity values of the initial alarm message of the concerned component, based on the inferred logical consequences.

10. The method (100) according to any one of the preceding claims, wherein the combined information model rules related to the initial alarm message of the component are translated to a subset of an information model specific to the plant.

11. The method (100) according to any one of the preceding claims, wherein the enriched alarm message (140) comprises default alarms generated by the respective component of the plant.

12. A computer system, comprising:
an input terminal, for providing initial alarms (110) of a concerned component of a plant and/or for providing topologically data (120) of the plant;
an output terminal, for providing an enriched alarm (140) related to the concerned component of the plant;
processing unit, which is coupled to the input terminal and the output terminal; and wherein the computer system is configured to perform any one of the method for generating an enriched alarm message (140) according to claim 1 to 11.

13. Use of a computer system according to claim 12 for generating an enriched alarm message (140) associated to an initial alarm message (110) of a concerned component of a plant according to any one of claims 1 to 11.

14. A computer program, comprising instructions, which, when the program is executed by a computer, cause the computer to carry out a method according to any one of claims 1 to 11.

15. A computer-readable storage medium for storing the computer program according to claim 14.
